# EUROPEAN PATENT APPLICATION

(11) **EP 4 621 992 A1**
(43) Date of publication of application: **24.09.2025**
(21) Application number: 24386028.5
(22) Date of filing: 19.03.2024
(51) Int. Cl.: H01Q 1/32, H01Q 19/06, H01Q 21/06, H01Q 3/34

(54) **RADAR DEVICE HAVING SCANNING-ARRAY ANTENNAS WITH DIELECTRIC LENSING**

(71) Applicant: NXP B.V., 5656 AG Eindhoven (NL)
(72) Inventor: Doris, Konstantinos, 5656 AG Eindhoven (NL); Nandagopal, Harish, 5656 AG Eindhoven (NL); Syed, Waqas Hassan, 5656 AG Eindhoven (NL); Carluccio, Giorgio, 5656 AG Eindhoven (NL); Llombart Juan, Nuria, 5656 AG Eindhoven (NL); Cavallo, Daniele, 5656 AG Eindhoven (NL); Neto, Andrea, 5656 AG Eindhoven (NL); Alonso Del Pino, Maria, 5656 AG Eindhoven (NL); Geng, Jinglin, 5656 AG Eindhoven (NL)
(74) Representative: Hardingham, Christopher Mark

(57) **Abstract**

Disclosed is a radar device comprising a lensed·scanning-array unit, the lensed scanning-array unit comprising: a semiconductor package comprising: an array of antennas each having a respective feed on a first major surface of the semiconductor package and spaced apart along a first axis; and a radio frequency, RF, integrated circuit, IC, configured to operate with the first array of antennas as one of a scanning-array transmitter and a scanning-array receiver; and a lens arranged over the semiconductor package, and configured to focus incident radiation towards the semiconductor package; wherein the antenna feeds are arranged above a focal plane of the lens.

## Description

### Field

The present disclosure relates to radar devices such as radar transmitters and to radar receivers, which include at least one array of antennas configured for scanning-array operation through a lens.

### Background

Modern radar systems, particularly for automobile applications, typically operate at radio frequencies, RF, which fall into the millimetre-wave range between 30 GHz and 300 GHz. Many automobile radar systems, currently under development or recently implemented. operate in the 77 GHz range (between approximately 76 to 81 GHz) and the 140 GHz ranges between about 134 to 141 GHz, and 141 to 148.5 GHz.

Some radar systems, in particular but not limited to imaging radar, may require high angular resolution, particularly in azimuth (side-to-side for typical automobile applications). Although the resolution requirements in elevation (up-and-down, or height, for typical automobile applications) are generally less stringent, frequently detection according to elevation is also required. Known solutions to this problem include MIMO (multiple input multiple output) arrays using microstrip-based or waveguide based antennas. However, the limitations of such technologies, including limited EIRP (equivalent isotropic radiated power), limited resolution, large distribution losses and limited sensor dimensions, tend to be more apparent at high frequencies, and so, for example, the recent trend from 77 GHz towards 140 GHz operational frequency for many automotive radars have exacerbated the problems.

For applications such as automotive radar, the traditional method of physically rotating a radar transmitter or receiver has been superseded by electronically scanning the device across an angular range of directions, which may also be termed as "field of view" (FOV). Such electronic scanning is typically performed by so-called phased-array) techniques. In a phased-array radar transmitter, multiple antennas are spaced apart linearly, and used to generate copies of a transmitted signal. The signal may be a continuous or intermittent single frequency tone, or more commonly a tone which has a gradually changing, typically triangular or saw-tooth shaped frequency ("chirp"). The relative phase (and potentially the amplitude) of each copy of the transmitted signal is varied across the antennas, resulting in constructive interference between the copies only at specific angles, resulting in a directionally focussed signal. As will be discussed in more detail below, typically there is more than one unique angle at which the signal is maximum (with minima therebetween), for a specific phase difference; the angle or angles depends on the radiation wavelength, the phase difference, separation between each antenna, and the transmission medium. By varying the phase difference, the direction of the transmitted signal may be scanned across the FoV. As a corollary, the angle of arrival at a phased-array radar receiver may be determined by calculating the phase offset between antenna at which copies of the incoming signal from the antenna sum to a largest measurable signal.

Maximising the effectiveness of the radar includes maximising object detection. Since this relies on correctly identifying reflections as potential targets, the maximisation and smoothness of the output power, or gain, of both the antennas and receiver (or transmitter) including the antennas, remains a topic of interest.

### Summary

According to a first aspect of the present disclosure, there is provided a radar device comprising a lensed scanning-array unit, the lensed scanning-array unit comprising: a semiconductor package comprising: an array of antennas each having a respective feed with an associated phase centre on a first major surface of the semiconductor package and spaced apart along a first axis; and a radio frequency, RF, integrated circuit, IC, configured to operate with the first array of antennas as one of a scanning-array transmitter and a scanning-array receiver; and a lens arranged over the semiconductor package, and configured to at least one of focus transmitted radiation towards specific directions and focus incident radiation towards the semiconductor package; wherein the antenna feed phase centres are arranged above a focal plane of the lens. By moving the antenna feeds away from the focal plane of the lens, the focusing is smoothed such that the gain of the system is less variable over a scan angle of either incident or transmitted radiation.

In one or more embodiments, the lens is a one of elliptical and hyper-hemispherical lens. The lens may be of a plastics material. Plastics materials are particularly convenient for forming components of the radar system and in particular the lens since plastics are easy to process into preferred geometrical forms for instance by moulding.

In one or more embodiments, the antennas feed phase centres are in a plane which is within a range between one-half and one-and-a half times an operational wavelength, λd, of the antennas in the lens material above the focal plane of the lens. Such a range of displacement of the antenna feed phase centres from the focal plane provides an effective compromise between partial focusing which is beneficial in order to improve the overall gain, and smoothing out the maximum and minimum peaks which would otherwise occur if the radiation were focused to a point in the focal plane.

In one or more embodiments, a diameter of the lens is at least 3 times larger than an operational wavelength, λ0, of the antennas in free space. The lens should be sufficiently large to accommodate a suitable number of antennas in the array. Typically, but without limitation, this may be 4 to 8 antennas positioned at a separation between 08 λd and 1.2 times λd, where λd is an operational wavelength, λd, of the antennas in the lens material. The operational wavelength, λd, of the antennas in the lens material is typically about 0.5 to 0.7 times λ0.

In one or more embodiments the scanning-array unit is configured to scan radiation over an angular range of at least plus and minus 30° to a normal to the focal plane of the lens.

In one or more embodiments, each feed is one of an output feed and an input feed. In embodiments in which the feeds are output feeds, the radar device is configured as a transmitter; in embodiments in which the feeds are input feeds, the radar is configured as a receiver. The radar device may be configured as a transceiver with the ability to both transmit and receive radiation at different or overlapping feeds.

In one or more embodiments, the semiconductor package includes a second array of antenna feeds spaced apart along a second axis which is parallel to the first axis. The first array of antenna feeds may be configured to operate as transmitters and the second array of antenna feeds may be configured to operate as receivers.

In one or more embodiments the radar device further comprises a dielectric interposer between the semiconductor package and the lens. Including an interposer may be assist in properly aligning the lens with the semiconductor package.

In one or more embodiments the radar device further comprises a reflective material, configured to reflect radiation to or from the array of antennas respectively from or to an upper surface of the lens. Including a reflector may limit losses arising from power propagating from side faces of the lens, and may improve the fraction of radiation which, in the case of a transmitter, is propagated from an upper surface of the lens, and in the case of receiver is focused onto the array of antenna feeds.

In one or more embodiments, the reflective material is a metallic coating formed on at least part of a side face of the lens. This may typically be convenient for manufacture; the coating may be provided for example and without limitation by plating or electroplating.

In one or more embodiments, the reflective material is formed within or on the dielectric interposer. For example and without limitation, the dielectric interposer may comprise an aperture over the array of antennas, and the reflective material comprises a metal coating on an inner surface of the aperture.

In one or more embodiments, lens extends into the aperture. This may assist in correctly positioning and orienting the lens with respect to the antenna feed phase centres.

In one or more embodiments, the radar device may include a metallic stub above plane of the array of antennas, offset from the array of antennas and extending laterally way therefrom, and having a length which is an integer multiple of a quarter of an operational wavelength of the array of antennas. Including a quarter wavelength stub may assist in reducing radiative losses within the system.

In one or more such embodiments, the length of the stub is an odd multiple of a quarter of the operational wavelength of the array of antennas. In other such embodiments, the length of the stub is an even multiple of the operational wavelength of the array of antennas. Thus, attenuation of unwanted radiation may be affected by short-circuit, or open-circuit, attenuation. The stub may be metal, for instance it may be provided as a metal coating. Furthermore, such stubs may allow there to be an airgap between the lens and the package, and may improve the tolerance of the device to airgap variations which may, for instance, vary over the lifetime of the device.

These and other aspects of the invention will be apparent from, and elucidated with reference to, the embodiments described hereinafter.

### Brief description of Drawings

Embodiments will be described, by way of example only, with reference to the drawings, in which
FIG. 1a shows a perspective view of a lensed scanning-array unit;
FIG. 1b show the corresponding side view of the lensed scanning-array unit of FIG. 1a;
FIG. 2a shows a ray diagram of radiation transmitted from an antenna feed which is slightly off-centre from a central axis of the lens;
FIG. 2b shows a ray diagram of radiation transmitted from an antenna feed which is significantly off-centre from the central axis of the lens;
FIG. 3a shows a simulation of the gain of a unit of FIG. 1a, plotted against the scan angle or angle of output radiation θ;
FIG. 4a shows a schematic representation of a configuration according to one or more embodiments of the present disclosure;
FIG. 4b shows, schematically, a ray diagram of a lensed scanning-array unit, for a large scan angle θ3, for received radiation;
FIG. 5 shows a simulation of the gain plotted against the scan angle θ for a conventional configuration, and for a configuration according to embodiments of the present disclosure;
FIG. 6 shows, schematically, a section through a lensed scanning-array unit with a side reflector, according to one or more embodiments of the present disclosure;
FIG. 7a shows a simulation of the gain from a single antenna feed and the gain achieved by exciting all of the antenna feeds, for a configuration as shown in FIG. 5;
FIG. 7b shows the same configuration without a metallic reflector around the perimeter of the lens, and with a metallic reflector as illustrated in FIG. 6;
FIG. 8 shows, schematically, one way of providing a reflective surface around at least part of the sidewalls of the lens, according to one or more embodiments;
FIG.9a illustrates a schematic section through lensed scanning-array unit according to one or more embodiments of the present disclosure;
FIG.9b shows, schematically, a perspective view of such embodiments;
FIG.10a illustrates a schematic section through lensed scanning-array unit according to one or more other embodiments of the present disclosure;
FIG.10b shows, schematically, a perspective view of such embodiments;
FIG.11 illustrates a schematic section through lensed scanning-array unit according to one or more yet further embodiments of the present disclosure;
FIG. 12 shows, schematically, a cross-section through an embodiment of the present disclosure;
FIG. 13 illustrates the inclusion of a quarter wavelength stub linked to the reflector; and
FIG. 14 shows a plot of the normalised gain of a feed pattern (inside the lens) with and without the reflector and quarter wavelength stub.

It should be noted that the FIG.s are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### Detailed description of embodiments

One way of increasing the directionality of a transmitted radar signal, and thus the gain of the directional peak (or, equivalently, increasing the directional discrimination of a received radar signal), is to focus the transmitted signal by use of an optical lens. At millimetre-wave frequencies of the electro-magnetic (EM) radiation, it is more accurate to refer to a "dielectric lens" rather than an "optical lens". A dielectric lens operates according to refraction at the lens-air interfaces, and speed of irradiation through the material which is defined by its refractive index. Dielectric lenses in the millimetre-wave frequency are typically made of plastics material. A lens has a "F-number", defined as the ratio of its focal length to its diameter. Placing a lens over individual antennas may assist in increasing the gain in particular directions, since the lens may operate to focus radiation from (or to) specific directions to a particular position in the focal plane of the lens. If the antenna (transmitting or receiving) is located in that particular position, the gain will be enhanced. However, in case the antenna is misaligned, or for other directions, the gain may be reduced.

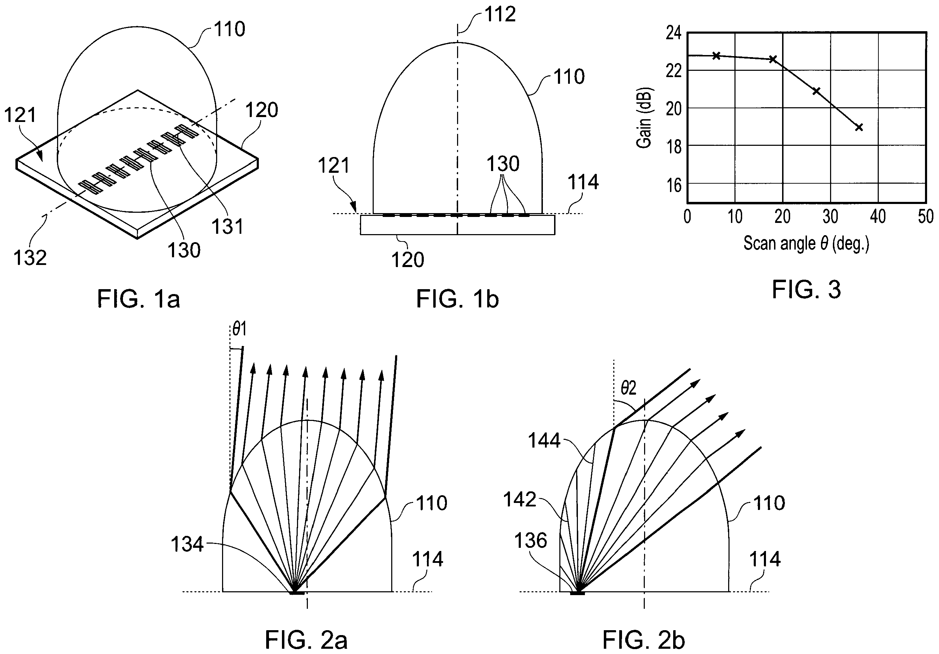

Alternatively, a single lens may be positioned over an array of antennas. A perspective view of such a configuration is illustrated in FIG. 1a; the corresponding side view this figure shown in FIG. 1b. The FIG.s show a lens 110 which may be an elliptical lens as shown, hyperspherical, or other suitable geometrical shape. Lens 110 is positioned over a semiconductor package 120. The semiconductor package includes a plurality of antennas having output (or input) ports or feeds 130. The skilled person will appreciate that the radiation emitted from an antenna feed appears to radiate from a specific location in the feed, commonly referred to as the phase centre 131. Similarly, radiation received at an antenna can be considered as being received at the corresponding phase centre. The output (or input) feeds or feed-points are positioned on a first major surface 121 of the semiconductor package 120. The antennas may be, as shown, slot antennas. In particular they may be double-slot antennas, aligned along the radiation's E-field. Alternatively, they may be other types of antennas such as dipole antennas or patch antennas. The output (or input) feeds of the antennas are arranged in a linear array, and spaced apart along a first axis 132. They may be uniformly spaced, or non-uniformly spaced. The lens is positioned above the semiconductor package such that the output (or input) feeds 130 are aligned in a focal plane 114 of the lens.

FIG. 2a shows a ray diagram of radiation transmitted from an antenna feed 134 which is slightly off-centre from the central axis 112 of the lens 110. The lens acts to focus radiation from the antenna feed 134. As can be seen, the output radiation is focused at an angle θ1 from the lens access, which itself is normal to the focal plane 114 at the top or surface of the semiconductor package 120. This illustrates a first disadvantage of such a configuration (for receivers): the focus of the radiation only aligns exactly to a specific one of the feeds 134 for particular angles θ1. For other values of the angle θ the lens may focus the radiation to a position which is between individual ones of the feeds 130. As a corollary, for a transmitter, the lens is only effective at transmitting radiation from the antennas, for particular output radiation angles θ.

FIG. 2b shows a ray diagram of radiation transmitted from an antenna feed 134 which is significantly off-centre from the central axis 112 of the lens 110. Again, the lens focuses the radiation from the feed 136, to a direction which is at a second angle θ2 to the lens access, and in this case, since the antenna feed 136 is not close to the lens axis 112, the angle is a large angle θ2. However, as can be seen by the rays 142, 144, some of the transmitted power hits the side, or sidewall, of the lens. This FIG illustrates a second disadvantage of the above configuration: for a large field of view, FOV, corresponding to large values of θ2, some of the radiation is lost due to refraction from the lens surface, reducing the gain of the configuration. FIG. 3a shows a simulation of the gain of such configuration, plotted against the angle of output radiation θ. As shown in Figure, the gain reduces significantly at scan angles of greater than 20°. The field of view of a radar with such configuration is thus restricted.

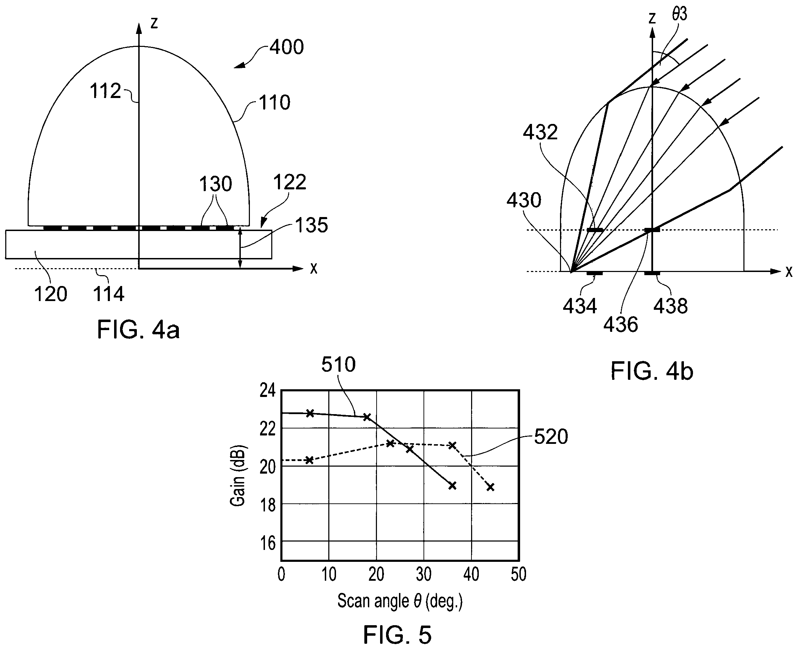

FIG. 4a shows a schematic representation of a configuration according to one or more embodiments of the present disclosure. The figure shows a radar device comprising a lensed scanning-array unit 400. The lensed scanning-array unit 400 comprises a semiconductor package 120 which includes an array of antennas each of which have a feed 130 on a first major surface 121 of the semiconductor package 120. The feeds 130 are arranged in a linear array and spaced apart from each other. The linear array may, but need not, pass through the lens axis 112. The semiconductor package 120 includes (not shown) an RF IC which is configured to operate, with the array of antennas, as a scanning-array transmitter, receiver, or transceiver, to scan over a range of angles θ. The lens, which may be a dielectric lens, and as shown may be an elliptical lens, is arranged over the array of antennas, in order to at least partially focus radiation to (for a receiver) and from (for a transmitter) the antennas. Typically, the lens may be manufactured from a plastics material, such as HDPE (high density polyethylene), PTFE (poly-tetra- fluoro-ethylene, etc. The lens is positioned above the semiconductor package such that the phase centres 131 of the feeds 130 of the antennae are not in the focal plane of the lens. Rather, the phase centres are closer to the refracting upper surface of the lens than is the focal plane. Thus, in the orientation shown in FIG. 4a, the phase centres 131 are above the focal plane 114. They are displaced by a distance shown at 135.

FIG. 4b shows, schematically, a ray diagram of such a lensed scanning-array unit 400, for a large scan angle θ3, in this case for received radiation. As can be seen, for such a large angle θ, the field focused onto the focal plane (at 430) does not align with one of the antenna feed, 434, (which in this illustration is an input feed) in case the refeed is on the focal plane. Instead, by shifting the input feed above the focal plane into position shown at 432, at some of the radiation is received at the input feed 432, and some of the radiation is received by a neighbouring feed 436. The skilled person will appreciate that this benefit comes at a disadvantage for radiation at or near to the normal: by shifting a feed, 438, on the lens axis towards the surface of the lens to position 436, the focusing of radiation near to, in this case at, the normal is less perfect than it would be at the focal plane. The gain at feed 436 at scan angle θ = 0 is thus reduced, compared with the conventional case in which the feed is on the focal plane. By combining the radiation received at feed 432, with that at feed 436, with suitable phase offsets, and weightings (corresponding to the amplitudes expected at any specific height-offset feed, for any chosen angle), the radiation from that angle can be determined. By sequentially adjusting both the phase offsets and weightings for each of the feeds, the receiver can be made to "scan" across field of view.

A "phased-array" radar is a particular type of scanning radar in which the angle of transmission (or reception) is determined by transmitting (or receiving) multiple coherent copies of a radar signal from a, generally linear, array of antennas, with a specific phase offset between each antenna such that the radiation constructively interferes to form a nearly uniform wavefront for a specific direction, and changing the phase offsets to scan the beam over a range of angles, or field of view. The present disclosure is concerned with more generic scanning radar, in which both the phases and weightings at multiple (but not necessarily all) antennas may be varied to reconstruct a specific angle of transmission (or reception), in conjunction with at least partial focussing using a lens.

FIG. 5 shows a simulation of the gain plotted against the scan angle θ for a conventional configuration at solid line 510, and for a configuration according to embodiments of the present disclosure at dashed line 520. In this particular example, the lens has a diameter of 5* λ, where λ is the wavelength of the radiation, and the feeds are displaced upwards by a distance λ. The choice of λ as the offset in this embodiment is a compromise between loss of gain for broadside and increased scan range. For different lens diameters or different requirements will correspond to different suitable offsets. That is to say, in FIG. 5 the distance 135 is equal to λ. As can be seen in the figure, at small scan angles θ, where θ is close to 0° or less than 20°, the conventional configuration exhibits a high again. However as previously mentioned, the gain falls significantly with scan angles of greater than 20°. In contrast, for configurations according to embodiments of the present disclosure, the gain at smaller values of θ is reduced, in this example by about 2dB. However, the gain does not drop-off sharply at angles of around 20°. Rather the gain is nearly constant, and as shown may actually slightly increase, for larger scan angles up to or around 40°. The gain only drops significantly for very high scan angles above 45°. In summary then, by shifting the antenna feed phase centres 131 away from the focal plane, and in particular in a direction towards the lens surface, the gain curve against scan angle may be significantly flattened and the useful angles broadened, corresponding to an increase in the accessible scan angle or field of view.

Moreover, positioning the antennas above the focal plane of the lens may be advantageous for a phased-array radar by smoothing out fluctuations in gain that would otherwise occur as the scan angle of the radiation changes. In particular, were the antenna to be positioned at the focal plane, there would be scan angles at which (incoming) radiation would be focused into gaps between the antenna feeds. As a result, as the scan angle changes, there would be large minima and maxima in the gain of the system. In contrast, and according to embodiments of the present disclosure, moving the antennas above the focal plane, the focusing is less sharp; in effect it may be considered to be a soft-focussed or even de-focused, and is received at (or transmitted from, in the case of a transmitter) more than one antenna feed. The maximum and minima of the gain may therefore be significantly smoothed out resulting in a more uniform radiation beam, with respect to scanning angle, in the case of a transmitter, or more uniform response in the case of a receiver.

Although not visible at the scale of the figure, the antenna feeds 130 may be in direct contact with the lens or may be separated by a gap such as a small air gap. Providing an air gap between the antenna feeds 130 and the lens 110 may allow for increased geometrical tolerances of the antennas within the packaging. Provided that any such gap is small compared to the wavelength of the radiation, there may be evanescent coupling between the antenna and the lens and thus any losses associated with multiple reflective surfaces may be kept to a minimum or largely eliminated or avoided.

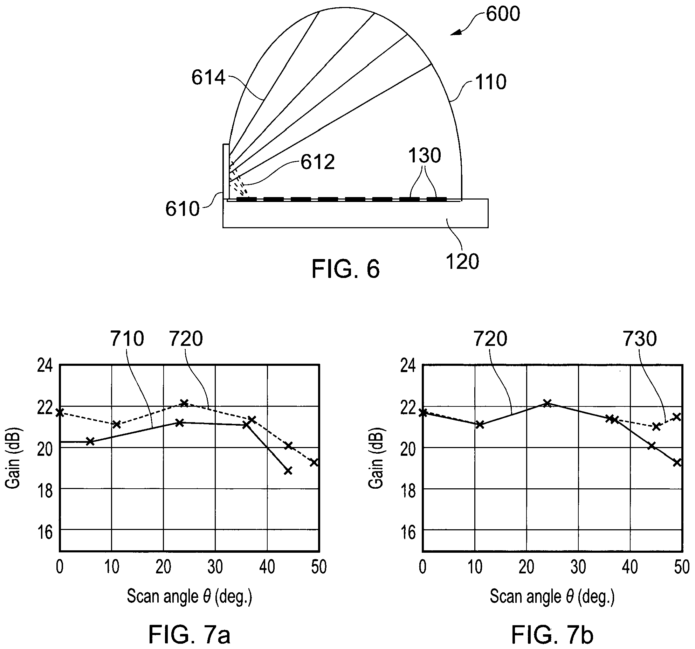

FIG. 6 shows, schematically, a section through a lensed scanning-array unit 600 with a side reflector 610, according to one or more embodiments of the present disclosure. Similar to the embodiment shown in FIG. 5, the semiconductor package 120 is arranged with a lens 110 such that the antenna feed phase centres 131 are in a plane which is above the focal plane of the lens. However, around at least part of the side of the lens, is located a reflective surface 610, typically of metal, as shown. As will be discussed in more detail hereinbelow, the reflective surface 610 may be provided by anyone of a variety of techniques and components. The reflector acts such that power irradiated from the antenna feeds 130 which is incident on the sidewall of the lens is completely reflected (rather than undergoing a refractive loss according to Snell's law which would be the case for, for example, an interface into the air or other transmissive medium). As can be seen from the ray 612, and its reflection 614, power which would otherwise be partially lost from proper lens illumination from the side face, or sidewalls, of the lens, may be redirected towards the top of the lens and thus propagate to be part of the signal.

In order to transmit a radar signal at a particular scan angle θ, each of the antenna feeds 130 are simultaneously excited with an appropriate amplitude and phase distribution, to approximate or match the electromagnetic field distribution that would be obtained on the array plane if the lens was used in reception, for radiation from that scan angle θ. FIG. 7a shows a simulation of the gain from a single antenna feed 130 (solid line 710) and the gain achieved by exciting some or all of the antenna feeds 130 with, predetermined weightings, (dashed line 720), for an configuration as shown in figure 5. Exciting all of the antennas increases the overall gain.

FIG. 7b shows the same configuration (some or all antennas excited, with predetermined phases and amplitudes) at 720 without a metallic reflector around the perimeter of the lens, and at 730 with a metallic reflector as illustrated in FIG. 6. As can be seen from the figure, inclusion of the reflector such as metallic reflector 610 extends the scan angle θ range over which the gain is high (in this case, 21 to 22 dBi) and relatively flat, beyond 45°.

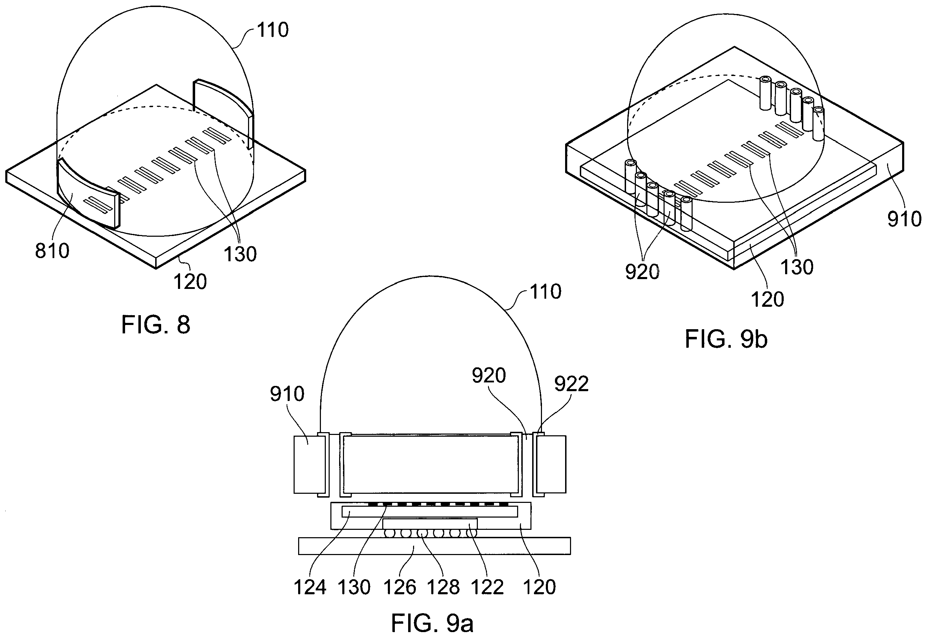

FIG. 8 shows, schematically, one way of providing a reflective surface around at least part of the sidewalls of the lens, according to one or more embodiments. In this example, the sides of the lens, typically of plastics material, are locally plated or electroplated to provide the reflectors. The plating or electroplating may be, as shown, only around the perimeter of the lens near to the axis of the antenna feeds 130. Alternatively, the lens may be plated or electroplated around the complete perimeter.

FIG.9a illustrates a schematic section through lensed scanning-array unit according to one or more embodiments of the present disclosure. FIG.9b shows, schematically, a perspective view of such embodiments. In such embodiments, the semiconductor package 120 is separated from the lens 110 by means of a spacer or interposer. The interposer 910 may be for example a printed circuit board, or other component fabricated from a dielectric material such as a plastics material. In such embodiments, there may be vias 920 through the interposer. The vias may be made of a solid reflective material, or may be lined with a reflective material such as a metal, as shown at 922. The vias may extend around the complete circumference of the edge of the lens, or may be, as shown limited to the local region near to the axis of alignment of the antenna feeds 130. As will be familiar to the person skilled in the art of semiconductor packages and in particular antenna-in-package (AiP) semiconductor packages, the semiconductor package may include a semiconductor die or an RF IC 122, along with a redistribution layer (RDL) 124 provided in order to route the output RF signal (in the case of a transmitter) and/or the input RF signal (in the case of a receiver) to the internal feeds 130 at the top surface of the semiconductor package 120. Such a package, which may also be referred to as a FCCSP (flip chip chip scale package) is known, for instance from NXP semiconductors and others. The semiconductor package 120 may further be electrically connected to a substrate 126 for example and without limitation by means of solder balls 128 as shown, again as will be familiar to the person skilled in the art of semiconductor packages. The thickness of the circuit board or interposer 910 may be selected such that the plane of the antenna feed phase centres 131 is a suitable offset above the focal plane of the lens 110, or, in the case of aside reflector, such that the reflector affects only selected ones of the antenna feeds - such as, for example, only the edge-most feed. Typically, the thickness of the interposer may correspond to the height of the reflector. The lens may be directly bonded to the interposer or circuit board 910 or they may be otherwise connected or integrated. The package may be in direct contact with the circuit board or interposer 910 or there may be an air gap between them as shown.

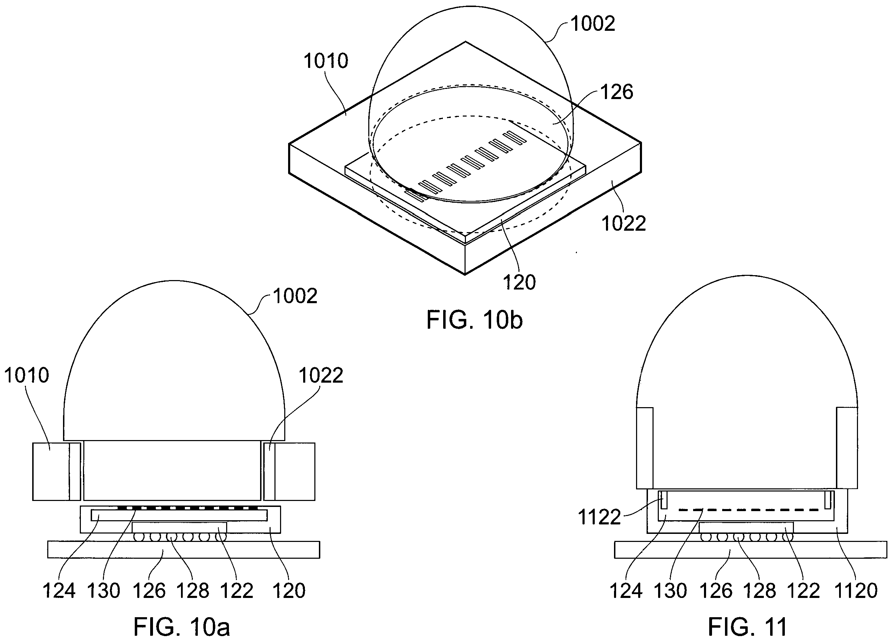

FIG.10a illustrates a schematic section through lensed scanning-array unit according to one or more other embodiments of the present disclosure. FIG.10b shows, schematically, a perspective view of such embodiments. Such embodiments are similar to those shown in FIG. 9a and 9b and include a semiconductor package 120 which comprises an RF IC 122, a redistribution layer (RDL) 124 connecting the RF output from the RF IC to the antenna feeds 130. Moreover, the semiconductor package 120 may be electric connected for example by solder balls 128 to a circuit board or other substrate 126. Another circuit board such as a printed circuit board or interposer 1010 is included around a perimeter of the semiconductor package. The interposer 1010 includes an annular cut-out or aperture, which may have a generally circular profile and be of similar size to the lens 1002. The lens 1002 may, as shown, extend into, or be inserted into, the annular cut-out or aperture in the interposer 1010. The sidewalls of the annular cut-out or aperture of the interposer may be coated with a reflector, such as a metallic reflector 1022.

FIG.11 illustrates a schematic section through lensed scanning-array unit according to one or more yet further embodiments of the present disclosure. The substrate 126, and solder balls 128 may be similar to those shown in FIG. 10a. The semiconductor package 1120 shown in FIG. 11 includes the reflector. In particular, the reflector 1122 may be provided as part of the RDL 1124 within the semiconductor package 1120. In such embodiments, the antenna feeds may be not at the surface of the RDL, rather, there is dielectric material forming part of the semiconductor package above the antenna feeds 130. That is to say, in this example the first major surface of the semiconductors package is not an external surface, but rather an internal surface at which the antenna feeds are located and above which there may be further material. Radiation either launched from or directed towards the antenna feeds 130 at a large angle θ may be reflected from the reflector, back towards the surface of the lens semiconductor package and the lens. In such embodiments, the reflector 1122 may be provided for example by through vias or metal coatings on or within the RDL 1122.

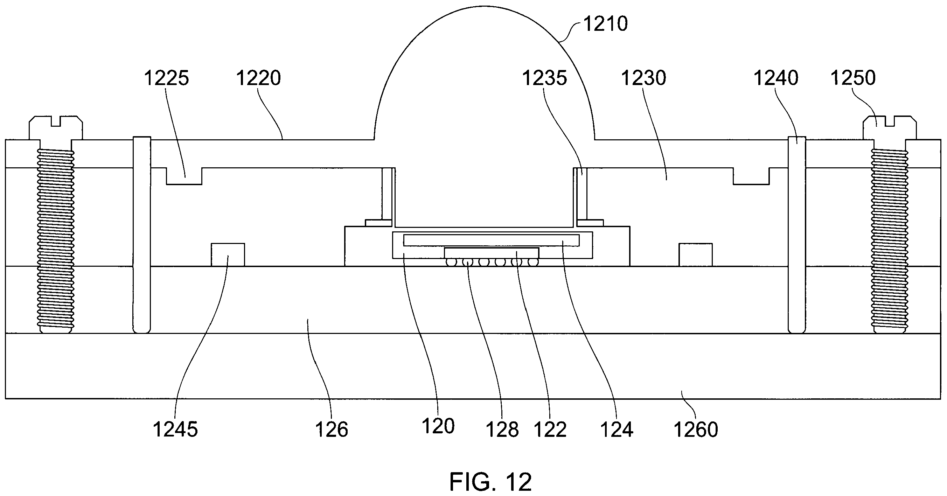

FIG. 12 shows, schematically, a cross-section through an embodiment of the present disclosure. A semiconductor package 120, which is configured as an antenna-in-package including semiconductor die 122, and a redistribution layer 124, is mounted on a circuit board such as a sensor printed circuit board 126 by means of solder balls 128. A lens 1210 which may be of a plastics material may be integral to a plastics insert 1220. The plastics insert 1220 partially fits into a aperture through a second printed circuit board (PCB) 1230 which may be referred to as reflector PCB. The aperture is lined with a reflective material 1235 such as a metal reflector. The plastics insert 1220 may be accurately located with the reflector PCB 1230 by means of pins 1225. The assembly of the plastics insert and reflector PCB 1230 may be accurately located with respect to the sensor PCB 126 by means of either dowels 1240, bolts 1250, or both. Alternatively, or in addition, target discs may be provided on the sensor PCB 126 in order to locate the assembly of the reflector PCB 1230 and plastics insert 1220 to the sensor PCB. The dowels 1240, bolts 1250 or both may further attach the sensor PCB 126 to a heatsink or casing support plate 1260. The skilled person will recognise that this is merely one convenient form of a radar device comprising a lensed scanning-array unit. Many alternative variants will occur naturally to the skilled person and fall within the scope of the present disclosure.

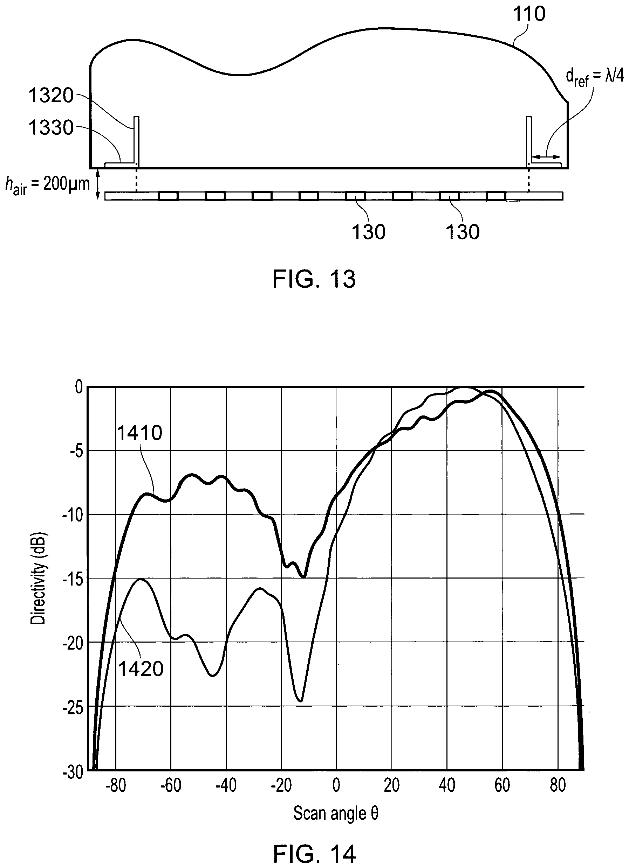

FIG. 13 illustrates the inclusion of a stub (typically a quarter wavelength stub) linked to the reflector. The stub may be a metal coating, or other suitable material. In this example, the vertical reflector 1320 is fabricated within the lens 110. Part or parts of the bottom surface of the lens is coated with a metal layer 1330. The metal coating may extend around the whole of the perimeter of the lens to form an annular ring or flange, or may be localised, as a stub to the axis of the antenna feeds 130. The width, d_{ref}, of the ring or stub may be set to a quarter wavelength (λ/4) of the radiator signal. Furthermore, in this example there is included and a gap hₐᵢᵣ with a width of approximately 200 µm. Whereas the stub in FIG. 13 is a quarter wavelength in order to provide short circuit termination, in other embodiments, the stub may be a half wavelength (or multiple copies of half wavelengths), in order to facilitate open circuit termination. When combined with a reflector on the (vertical) side of the lens, the resulting feature may have an "L-shaped" cross-section; it may take the form of a metal flange around the lens (or part of a flange, since generally the stub and reflector are not required around the complete circumference of the lens). In other embodiments, the stubs may take the form of chokes, corrugations, or other periodic structures, which may be, for example, metalized onto, or engraved into, the interposer.

FIG. 14 shows a plot of the normalised gain of a feed pattern (inside the lens) without (at 1410) and with (at 1420) the reflector and quarter wavelength stub. As can be seen, the sidelobe (at negative scan angles) is significantly reduced.

As used herein, terms indicating relational positions are to be construed as being in a geometrical frame of reference of the radar device itself, with the lens being at the top, rather than to any external geometrical frame of reference. That is to say, words such as "above" and "over" shall be construed as referring to the geometrical frame of reference of the radar device itself and not to any specific orientation with regards to other coordinate systems. For example and without limitation the radar device may be positioned on a vehicle in a vertical (with respect to the ground) orientation such that the lens protrudes away from the vehicle horizontally. Nonetheless even in such an orientation the skilled person will understand that, in relation to the radar device itself, the lens is still arranged over the semiconductor package, and the antenna feed phase centres are arranged above a focal plane of the lens.

From reading the present disclosure, other variations and modifications will be apparent to the skilled person. Such variations and modifications may involve equivalent and other features which are already known in the art of radar devices, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims [delete if not relevant] and reference signs in the claims shall not be construed as limiting the scope of the claims.

Furthermore, the word "may" is used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

## Claims

1. A radar device comprising a lensed scanning-array unit,
the lensed scanning-array unit comprising:
a semiconductor package comprising:
an array of antennas each having a respective feed with an associated phase centre on a first major surface of the semiconductor package and spaced apart along an axis; and
a radio frequency, RF, integrated circuit, IC, configured to operate with the first array of antennas as one of a scanning-array transmitter and a scanning-array receiver; and
a lens arranged over the semiconductor package, and configured to at least one of focus transmitted radiation towards specific directions and focus incident radiation towards the semiconductor package;
wherein
the antenna feed phase centres are arranged above a focal plane of the lens.

2. The radar device as claimed in claim 1:
wherein the lens is a one of elliptical and hyper-hemispherical.

3. The radar device as claimed in any claim 1 or 2,
wherein the antennas feed phase centres are in a plane which is within a range between one-half and one-and-a half times an operational wavelength of the antennas in a material of the lens above the focal plane of the lens.

4. The radar device as claimed in any preceding claim,
wherein a diameter of the lens is at least 3 times larger than an operational wavelength of the antennas.

5. The radar device as claimed in any preceding claim,
wherein the scanning-array unit is configured to scan radiation over an angular range of at least plus and minus 30° to a normal to the focal plane of the lens.

6. The radar device as claimed in any preceding claim wherein each feed is one of an output feed and an input feed, and wherein radar device as claimed in any preceding claim being a one of a transmitter a receiver, and a transceiver.

7. The radar device as claimed in any of claims 1 to 5, wherein the radar device is a transceiver, and wherein the array of antennas is a first array of antennas each having a respective feed on a first major surface of the semiconductor package and spaced apart along a first axis, and further comprising a second array of antennas each having a respective feed on the first major surface of the semiconductor package and spaced apart along a second axis, wherein the second axis is parallel to the first axis.

8. The radar device as claimed in any preceding claim:
further comprising a dielectric interposer between the semiconductor package and the lens.

9. The radar device as claimed in any preceding claim:
further comprising a reflective material, configured to reflect radiation to or from the array of antennas respectively from or to an upper surface of the lens.

10. The radar device as claimed in claim 9:
wherein the reflective material is a metallic coating formed on at least part of a side face of the lens.

11. The radar device as claimed in claim 9 when dependant on claim 8:
wherein the reflective material is formed within or on the dielectric interposer.

12. The radar device as claimed in claim 11,
wherein the dielectric interposer comprises an aperture over the array of antennas, and the reflective material comprises a metal coating on an inner surface of the aperture.

13. The radar device as claimed in claim 9 or any claim depending from claim 9, further comprising a stub above plane of the array of antennas, offset from the array of antennas and extending laterally way therefrom, and having a length which is an integer multiple of a quarter of an operational wavelength of the array of antennas.

14. The radar device as claimed in claim 13, wherein the length of the stub is an odd multiple of a quarter of the operational wavelength of the array of antennas.

15. The radar device as claimed in claim 13 or 14, where in the stub is a metal coating.
